(19) Europäisches Patentamt
European Patent Office
Office européen des brevets

(11) EP 2 456 619 B1

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **10732362.8**

(22) Anmeldetag: **13.07.2010**

(51) Int Cl.:
***B32B 27/06*** $^{(2006.01)}$ ***B32B 27/28*** $^{(2006.01)}$
***B32B 27/36*** $^{(2006.01)}$ ***B29C 45/14*** $^{(2006.01)}$
***B29C 45/16*** $^{(2006.01)}$ ***B29C 70/70*** $^{(2006.01)}$
***B32B 27/08*** $^{(2006.01)}$ ***C08L 67/02*** $^{(2006.01)}$
***C08L 55/02*** $^{(2006.01)}$ ***C08L 25/06*** $^{(2006.01)}$
***C08L 51/04*** $^{(2006.01)}$

(86) Internationale Anmeldenummer:
**PCT/EP2010/060068**

(87) Internationale Veröffentlichungsnummer:
**WO 2011/009772 (27.01.2011 Gazette 2011/04)**

(54) **BAUTEIL UMFASSEND EIN EINLEGETEIL SOWIE EINE KUNSTSTOFFUMMANTELUNG SOWIE VERFAHREN ZU SEINER HERSTELLUNG**

PART COMPRISING AN INSERT AND A PLASTIC SHEATHING AND METHOD FOR THE PRODUCTION THEREOF

ELÉMENT COMPRENANT UNE PARTIE D'INSERTION AINSI QU'UNE ENVELOPPE EN MATIÈRE SYNTHÉTIQUE ET PROCÉDÉ DE FABRICATION ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 EP 09166252**

(43) Veröffentlichungstag der Anmeldung:
**30.05.2012 Patentblatt 2012/22**

(73) Patentinhaber: **BASF SE**
**67056 Ludwigshafen am Rhein (DE)**

(72) Erfinder:
- **VON BENTEN, Rebekka**
**67063 Ludwigshafen (DE)**
- **TALEBLOO, Alireza**
**55130 Mainz (DE)**
- **KROEGER, Harald**
**67459 Boehl-Iggelheim (DE)**
- **EIBECK, Peter**
**67346 Speyer (DE)**
- **MINKWITZ, Rolf**
**68167 Mannheim (DE)**

(56) Entgegenhaltungen:
**EP-A1- 0 897 785** **WO-A1-00/61664**
**WO-A1-2008/099009**

- **DATABASE WPI Week 200461 Thomson Scientific, London, GB; AN 2004-628378 XP002605965 -& JP 2004 230633 A (OJI PAPER CO) 19. August 2004 (2004-08-19)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 456 619 B1

## Beschreibung

Die Erfindung betrifft ein Bauteil, umfassend ein Einlegeteil sowie eine Kunststoffummantelung aus mindestens zwei Kunststoffkomponenten, wobei das Einlegeteil von einer Kunststoffkomponente A umschlossen wird und die erste Kunststoffkomponente A von einer zweiten Kunststoffkomponente B umschlossen ist. Die Erfindung betrifft weiterhin ein Verfahren zur Herstellung eines solchen Bauteils.
Bauteile, die ein Einlegeteil und eine Kunststoffummantelung umfassen, werden zum Beispiel bei Verwendung von metallischen Einlegeteilen für die Integration von Elektronikbauteilen beispielsweise in der Automobiltechnik oder der Luft- und Raumfahrttechnik eingesetzt. Hierbei ist ein mediendichter beziehungsweise stoffschlüssiger Verbund im Bauteil erforderlich, um ein Eindringen von Feuchtigkeit beziehungsweise Flüssigkeit und damit eine Schädigung der elektronischen Komponenten zu verhindern. Die Dichtheit des Bauteils muss auch dann gewährleistet bleiben, wenn das Bauteil Temperaturschwankungen unterliegt. Ein Grund für mangelhafte Dichtheit des Stoffschlusses bei Verbundkonstruktionen aus einem metallischen Einlegeteil mit einer Kunststoffummantelung kann zum Beispiel aus einer schlechten Benetzung und somit einer schlechten Anhaftung der Metallkomponente durch die Kunststoffkomponente resultieren. Auch führen Unterschiede in der thermischen Ausdehnung der metallischen Komponente und der Kunststoffkomponente zu Spannungen, die Risse verursachen können.
Ein Bauteil in Form eines Steckers, bei dem ein metallisches Einlegeteil von einer Kunststoffummantelung umschlossen ist, ist beispielsweise aus EP-B 0 249 975 bekannt. Um eine dichte Verbindung zwischen Kunststoff und Metall zu erzielen, ist zwischen dem äußeren Kunststoffmaterial und dem metallischen Einlegeteil ein flexibles Kunststoffmaterial eingebracht. Das flexible Kunststoffmaterial ist zum Beispiel ein unverstärktes thermoplastisches Elastomer.
Aus EP-A 1 496 587 ist ein Verbundbauteil bekannt, bei dem ein Flachkabel aus einer abgedichteten Struktur aus einem Kunststoffmaterial herausgeführt wird. Zur Abdichtung des Spaltes, an dem das Kabel aus dem Kunststoffmaterial austritt, wird die Öffnung durch einen Flüssigkautschuk aufgefüllt, der anschließend gehärtet wird.
Auch aus DE-C 100 53 115 ist eine Durchführung eines Kabels aus einem Kunststoffmantel beschrieben. Hier erfolgt die Abdichtung durch ein Dichtmittel, das adhäsiv sowohl zum Material der Tülle als auch zum Mantelmaterial der Leitungen ist. Als geeignete Dichtmittel sind zum Beispiel Fett, Wachs, Harz, Bitumen oder dergleichen genannt.
Eine weitere Steckerverbindung, bei der metallische Stifte in einem festen Mantel aus einem Kunststoffmaterial aufgenommen sind, ist auch aus EP-A 0 245 975 bekannt. Ein flexibles Kunststoffmaterial wird zwischen die Metallstifte und den äußeren Mantel eingesetzt, um eine dichte Verbindung zu erzielen.
Ein Bauteil, bei dem Einlegeteil von einer Kunststoffschicht ummantelt ist, ist auch aus WO-A 2008/099009 bekannt. Bei diesem Bauteil wird das metallische Einlegeteil zunächst mit einer Kunststoffmasse von geringer Viskosität umhüllt und in einem zweiten Schritt wird die Umhüllung mit einer Kunststoffhartkomponente umspritzt. Als geeignete Kunststoffe, die die geringe Viskosität aufweisen, sind Polyamide, aliphatische Polyester oder Polyester auf Basis von aliphatischen und aromatischen Dicarbonsäuren und aliphatischen Dihydroxyverbindungen genannt.
Eine weitere Gehäusedurchführung, bei der ein elektrischer Kontakt durch ein Gehäuse geführt wird und bei der die Gehäusedurchführung gegen das Eindringen unerwünschter Substanzen gedichtet ist, ist auch DE-B 10 2005 033 912 bekannt. Zum Abdichten wird die Rautiefe des Leiterelements im Dichtbereich durch Galvanisieren erhöht.
Ein Nachteil aller aus dem Stand der Technik bekannten Kunststoffumhüllungen von Einlegeteilen ist, dass diese insbesondere bei Einsatz unter Temperaturwechseln keine ausreichende Mediendichtheit bieten.
Aufgabe der vorliegenden Erfindung ist es daher, ein Bauteil, das ein Einlegeteil und eine Kunststoffummantelung umfasst, bereitzustellen, bei dem die Kunststoffummantelung auch bei einer Temperaturwechsellagerung eine ausreichende Mediendichtheit bietet.
Gelöst wird die Aufgabe durch ein Bauteil, umfassend ein Einlegeteil sowie eine Kunststoffummantelung aus mindestens zwei Kunststoffkomponenten, wobei das Einlegeteil von einer ersten Kunststoffkomponente A umschlossen wird und die erste Kunststoffkomponente A von einer zweiten Kunststoffkomponente B umschlossen ist, um eine mediendichte Verbindung entlang der Grenzfläche zwischen dem Einlegeteil und der Umhüllung aus der ersten Kunststoffkomponente A sowie entlang der Grenzfläche zwischen der ersten Kunststoffkomponente A und der zweiten Kunststoffkomponente B zu erhalten, so dass die mit einem Differenzdruckverfahren bei einem Prüfdruck von 0,5 bar bestimmte Leckrate nach einem Klimawechseltest mit mindestens 200 Zyklen, bei denen das zu prüfende Bauteil abwechselnd einer Temperatur von -40°C und +150°C unterworfen wird, kleiner als 0,5 cm3 / min ist, dadurch gekennzeichnet, dass die erste Kunststoffkomponente A aufgebaut ist aus:

A1: 10 bis 100 Gew.-% mindestens eines thermoplastischen Styrol(co)polymeren und

A2: 0 bis 90 Gew.-% mindestens eines thermoplastischen (Co-)Polyesters,
jeweils bezogen auf den Polymeranteil der ersten Kunststoffkomponente A
und die zweite Kunststoffkomponente B aufgebaut ist aus

B1: 50 bis 100 Gew.-% mindestens eines teilkristallinen, thermoplastischen Polyesters auf Basis von aromatischen Dicarbonsäuren und aliphatischen oder aromatischen Dihydroxyverbindungen und

B2: 0 bis 50 Gew.-% mindestens eines thermoplastischen Styrol(co)polymers,
jeweils bezogen auf den Polymeranteil der zweiten Kunststoffkomponente B und wobei die erste Kunststoffkomponente A und die zweite Kunststoffkomponente B unterschiedliche Zusammensetzungen aufweisen.

Durch die Verwendung der ersten Kunststoffkomponente A, die aufgebaut ist aus dem mindestens einen thermoplastischen Styrol(co)polymeren und gegebenenfalls dem mindestens einen thermoplastischen (Co-)Polyester, wird eine im Vergleich zu den aus dem Stand der Technik bekannten Kunststoffummantelungen deutlich verbesserte Mediendichtheit insbesondere bei Einsatz des Bauteils bei Temperaturwechseln, erzielt.

In einer bevorzugten Ausführungsform enthält die erste Kunststoffkomponente A 50 bis 100 Gew.-% des mindestens einen thermoplastischen Styrol(co)polymeren und insbesondere 70 bis 100 Gew.-%. Entsprechend ist der Anteil des mindestens einen thermoplastischen (Co-)Polyesters vorzugsweise 0 bis 50 Gew.-% und insbesondere 0 bis 30 Gew.-%. Besonders bevorzugt ist eine Ausführung, in der 70 bis 90 Gew.-% eines thermoplastischen Styrol(co)polymeren und 10 bis 30 Gew.-% eines thermoplastischen (Co)-Polyesters enthalten sind.

Das thermoplastische Styrol(co)polymer A1 ist vorzugsweise ausgewählt aus der Gruppe bestehend aus Styrol-Butadien-Copolymeren, Styrol-Acrylnitril-Copolymeren (SAN), α-Methylstyrol-Styrol-Acrylnitril-Copolymeren, Styrol-Acrylnitril-Copolymeren mit partikelförmiger Kautschukphase aus Dienpolymerisaten oder Alkylacrylaten und α-Methylstyrol-Styrol-Acrylnitril-Copolymeren mit partikelförmiger Kautschukphase aus Dienpolymerisaten oder Alkylacrylaten, wobei die von Styrol verschiedenen Monomereinheiten jeweils mit einem Anteil von 15 bis 40 Gew.-% in den Copolymeren enthalten sind.

Die Komponente A1 enthält in der Regel 15 bis 60 Gew.-%, bevorzugt 25 bis 55 Gew.-%, insbesondere 30 bis 50 Gew.-%, partikelförmigen Pfropfkautschuk und 40 bis 85 Gew.-%, bevorzugt 45 bis 75 Gew.-%, insbesondere 50 bis 70 Gew.-%, thermoplastisches Styrol-(Co)polymer, wobei die Gewichtsprozente jeweils auf das Gesamtgewicht aus partikelförmigen Pfropfkautschuk und thermoplastischem (Co)polymer bezogen sind und zusammen 100 Gew.-% ergeben.

Zusätzlich kann das thermoplastische Styrol(co)polymer A1 α-Methylstyrol oder n-Phenylmaleinimid mit einem Anteil von 0 bis 70 Gew.-%, enthalten.

Die Masseanteile der von Styrol verschiedenen Monomereinheiten beziehungsweise der Anteil des α-Methylstyrols oder n-Phenylmaleinimids bezieht sich dabei jeweils auf die Masse des thermoplastischen Styrol(co)polymers A1.

In einer bevorzugten Ausführungsform enthält die Styrolkomponente A1 als Kautschukphase einen partikelförmigen Pfropfkautschuk auf Butadienbasis und als thermoplastische Hartphase Copolymerisate aus vinylaromatischen Monomeren und Vinylcyaniden (SAN), insbesondere aus Styrol und Acrylnitril, besonders bevorzugt aus Styrol, α-Methylstyrol und Acrylnitril.

Bevorzugt werden Acrylnitril-Butadien-Styrol-Polymerisate (ABS) als mit einem partikelförmigen Pfropfkautschuk schlagzähmodifiziertes SAN eingesetzt.

Unter ABS-Polymerisaten werden im allgemeinen schlagzähmodifizierte SAN-Polymerisate verstanden, bei denen Dien-Polymerisate, insbesondere 1,3-Polybutadien, in einer Copolymermatrix aus insbesondere Styrol und/oder α-Methylstyrol und Acrylnitril vorliegen. ABS-Polymerisate und ihre Herstellung sind dem Fachmann bekannt und in der Literatur beschriebenen, beispielsweise in DIN EN ISO 2580-1 DE vom Februar 2003, WO 02/00745 und WO 2008/020012, sowie in Modern Styrenic Polymers, Edt. J. Scheirs, Wiley & Sons 2003, pp. 305-338.

Der thermoplastische Polyester A2 ist vorzugsweise ausgewählt aus der Gruppe bestehend aus Polyethylenterephthalat, Polytrimethylenterephthalat, Polybutylenterephthalat und Copolyestern aus einer oder mehreren Disäuren mit einem oder mehreren Diolen und gegebenenfalls mit einem oder mehreren Lactonen sowie Mischungen aus mindestens zwei dieser Polyester.

Geeignete Disäuren, aus denen der Copolyester aufgebaut ist, sind zum Beispiel ausgewählt aus der Gruppe bestehend aus Terephthalsäure, Adipinsäure, Isophthalsäure, 2,6-Naphthalindicarbonsäure, Acelainsäure, Sebazinsäure, Dodecandisäuren, Cyclohexandicarbonsäuren und deren Mischungen.

Geeignete Diole, aus denen der Copolyester aufgebaut ist, sind zum Beispiel solche, die ausgewählt sind aus der Gruppe bestehend aus 1,2-Ethandiol, 1,3-Propandiol, 1,4-Butandiol, Pentandiol, 1,6-Hexandiol, 1,4-Hexandiol, 1,4-Cyclohexandiol, 1,4-Cyclohexandimethanol, Neopentylglykol, Polytetrahydrofuran und deren Mischungen.

Wenn zusätzlich eines oder mehrere Lactone zum Aufbau des Copolyesters verwendet werden, so sind diese vorzugsweise ausgewählt aus der Gruppe bestehend aus ε-Caprolacton, Hexano-4-Lacton, γ -Butyrolacton und γ-Valerolacton.

In einer bevorzugten Ausführungsform weist mindestens einer der in der Kunststoffkomponente A enthaltenen Polyester einen niedrigeren Schmelzpunkt auf als der Polyester B1 der zweiten Kunststoffkomponente B.

Bevorzugt ist als thermoplastischer Polyester A2 ein statistischer Copolyester aus Terephthalsäure (10-40 mol-%), 1,4-Butandiol (50 mol-%) und Adipinsäure oder Sebacinsäure (10-40 mol-%), wobei die Summe der Monomeren 100 Gew.-% ergibt. Besonders bevorzugt ist ein statistischer Copolyester aus Terephthalsäure (15-35 mol-%), 1,4-Butandiol (50 mol-%) und Adipinsäure (15-35 mol-%), wobei die Summe der Monomeren 100 Gew.-% ergibt.

Vorteil der niedrigeren Schmelztemperatur ist, dass durch Anschmelzen der ersten Kunststoffkomponente A beim Überspritzen mit der zweiten Komponente B ein besonders dichter Verbund möglich wird.

Zusätzlich kann die erste Kunststoffkomponente A eines oder mehrere Additive enthalten. Die Additive sind dabei üblicherweise ausgewählt aus der Gruppe bestehend aus faser- oder teilchenförmigen Füllstoffen, Zähmodifizierer, Flammschutzmittel, Nukleierungsmittel, Ruß, Pigmente, Farbmittel, Formtrennmittel, Wärmealterungsstabilisatoren, Antioxidantien, Verarbeitungsstabilisatoren und Verträglichkeitsvermittler.

Geeignete faserförmige Füllstoffe sind zum Beispiel Glasfasern, Kohlenstofffasern oder Aramidfasern. Üblicherweise eingesetzte teilchenförmige Füllstoffe sind zum Beispiel Kaolin, calciniertes Kaolin, Talkum, Kreide, amorphe Kieselsäure und gepulverter Quarz. Von den faser- oder teilchenförmigen Füllstoffen sind die teilchenförmigen Füllstoffe besonders bevorzugt. Ganz besonders bevorzugt sind Minerale und Glaskugeln, insbesondere Glaskugeln. Wenn die erste Kunststoffkomponente A Glaskugeln enthält, so liegt der Anteil der Glaskugeln vorzugsweise im Bereich von 0,1 bis 40 Gew.-%, bezogen auf die Gesamtmasse der ersten Kunststoffkomponente A.

Zur besseren Verträglichkeit mit der ersten Kunststoffkomponente A können die Füllstoffe an ihrer Oberfläche zum Beispiel mit einer organischen Verbindung oder einer Silanverbindung behandelt sein.

Als Zähmodifizierer für die erste Kunststoffkomponente A eignen sich zum Beispiel Copolymerisate, die aufgebaut sind aus mindestens zwei Monomereinheiten ausgewählt aus Ethylen, Propylen, Butadien, Isobuten, Isopren, Chloropren, Vinylacetat, Styrol, Acrylnitril und Acryl- beziehungsweise Methacrylsäurestern mit 1 bis 18 C-Atomen in der Alkoholkomponente. Geeignete Zähmodifizierer sind zum Beispiel aus WO-A 2007/009930 bekannt.

In der ersten Kunststoffkomponente A können Flammschutzmittel in Mengen von 0 bis 50 Gew.-%, bezogen auf die Gesamtmasse der ersten Kunststoffkomponente A, enthalten sein. Geeignete Flammschutzmittel sind zum Beispiel halogenhaltige Flammschutzmittel, halogenfreie Flammschutzmittel, auf Melamincyanurat basierende Flammschutzmittel, phosphorhaltige Flammschutzmittel oder blähgraphithaltige Flammschutzmittel.

In einer besonders bevorzugten Ausführungsform ist in der Kunststoffkomponente A mindestens ein Verträglichkeitsvermittler enthalten. Der Anteil des mindestens einen Verträglichkeitsvermittlers liegt vorzugsweise im Bereich von 0,05 bis 5 Gew.-%, insbesondere im Bereich von 1 bis 3 Gew.-%, jeweils bezogen auf die Gesamtmasse der Kunststoffkomponente A.

Die eingesetzten Verträglichkeitsvermittler können sowohl die Einbindung der Komponente A2 in die Matrix des Styrol(co)polymers A1 verbessern oder auch als Haftvermittler zwischen der ersten Kunststoffkomponente A und der zweiten Kunststoffkomponente B dienen. Als Verträglichkeitsvermittler eignen sich zum Beispiel mit Glycidylmethacrylaten gepfropfte Styrol(co)polymere, wie sie beispielsweise in Macromol. Symp. 2006, 233, Seiten 17-25 beschrieben sind. Auch mit Isocyanatgruppen gepfropfte Styrol(co)polymere, Poly[methylen(phenylenisocyanat)], Bisoxazoline, mit Oxazolingruppen gepfropfte Styrolcopolymere oder mit Maleinsäureanhydrid gepfropfte Styrolcopolymere sind geeignet. Insbesondere geeignet sind mit Epoxyfunktionalitäten ausgestattete Styrolcopolymere mit Methacrylsäureanteil. Bevorzugt sind statistische, epoxyfunktionalisierte Styrol-Acrylsäure-Copolymere mit einem Molekulargewicht $M_w$ von 3000 bis 8500 g/mol und einem Funktionalisierungsgrad von mehr als zwei Epoxygruppen pro Molekülkette. Besonders bevorzugt sind statistische, epoxyfunktionalisierte Styrol-Acrylsäure-Copolymer mit einem Molekulargewicht $M_w$ von 5000 bis 7000 g/mol und einem Funktionalisierungsgrad von mehr als vier Epoxygruppen pro Molekülkette.

Der mindestens eine teilkristalline, thermoplastische Polyester B1 auf Basis von aromatischen Dicarbonsäuren und aliphatischen oder aromatischen Dihydroxyverbindungen der zweiten Kunststoffkomponente B ist vorzugsweise ein Polyalkylenterephthalat oder eine Mischung aus mindestens zwei unterschiedlichen Polyalkylenterephthalaten. Das mindestens eine Polyalkylenterephthalat weist dabei vorzugsweise 2 bis 10 C-Atome im Alkoholteil auf.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, zum Beispiel durch Halogen wie Chlor oder Brom oder durch $C_1$-$C_4$-Alkylgruppen wie Methyl-, Ethyl-, i-Propyl-, n-Propyl- oder n-Butyl-, i-Butyl- oder t-Butylgruppen.

Die Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Bevorzugte Dicarbonsäuren sind 2,6-Naphthalindicarbonsäure, Terephthalsäure und Isophthalsäure oder deren Mischungen. Bis zu 30 mol-%, vorzugsweise nicht mehr als 10 mol-% der aromatischen Dicarbonsäuren können durch aliphatische oder cycloaliphatische Dicarbonsäuren, beispielsweise Adipinsäure, Azelainsäure, Sebazinsäure, Dodecandisäuren und/oder Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol, Neopentylglykol oder deren Mischungen bevorzugt.

Besonders bevorzugt ist der als Polyalkylenterephthalat ausgebildete teilkristalline, thermoplastische Polyester B1 der zweiten Kunststoffkomponente B ein Polyethylenterephthalat, Polytrimethylenterephthalat, Polypropylenterephthalat, Polybutylenterephthalat oder eine Mischung aus mindestens zwei dieser Polyalkylenterephthalate.

Ganz besonders bevorzugt ist der als Polyalkylenterephthalat ausgebildete teilkristalline, thermoplastische Polyester B1 der zweiten Kunststoffkomponente B ein Polybutylenterephthalat oder eine Mischung aus Polybutylenterephthalat (60 bis 90 Gew.-%) und Polyethylenterephthalat (10 bis 40 Gew.-%), wobei die Summe PBT und PET 100 Gew.-% beträgt.

Die Viskositätszahl der Polyester A2, B1 liegt im Allgemeinen im Bereich von 50 bis 220 ml/g, vorzugsweise im Bereich von 80 bis 160 ml/g (gemessen in einer 0,5 Gew.-%igen Lösung in einem Phenol/o-Dichlorbenzolgemisch (Gewichtsverhältnis 1:1) bei 250°C gemäß ISO 1628).

Insbesondere bevorzugt sind Polyester A2, B1, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem in DE-A 44 01 055 beschriebenen Verfahren hergestellt werden. Der Carboxylendgruppengehalt wird üblicherweise durch Titrationsverfahren, beispielsweise Potentiometrie, bestimmt.

Weiterhin ist es vorteilhaft, Polyethylenterephthalat-Rezyklate (auch scrap PET genannt) gegebenenfalls in Mischung mit Polyalkylenterephthalaten wie Polybutylenterephthalat einzusetzen.

Unter Rezyklaten versteht man im Allgemeinen sogenanntes Post Industrial Rezyklat oder Post Consumer Rezyklat.

Bei Post Industrial Rezyklat handelt es sich um Produktionsabfälle bei der Polykondensation oder bei der Verarbeitung, beispielsweise um Angüsse bei der Spritzgussverarbeitung, Anfahrware bei der Spritzgussverarbeitung oder Extrusion oder Randabschnitte von extrudierten Platten oder Folien.

Bei Post Consumer Rezyklat handelt es sich üblicherweise um Kunststoffartikel, die nach der Nutzung durch den Endverbraucher gesammelt und aufbereitet werden. Der mengenmäßig bei weitem dominierende Artikel sind blasgeformte Flaschen aus Polyethylenterephthalat, die beispielsweise für Mineralwasser, Softdrinks und Säfte eingesetzt werden.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise 8 mm betragen sollte.

Aufgrund der hydrolytischen Spaltung von Polyestern bei der Verarbeitung, zum Beispiel durch Feuchtigkeitsspuren, ist es bevorzugt, das Rezyklat vorzutrocknen. Der Restfeuchtegehalt nach der Trocknung beträgt vorzugsweise weniger als 0,2 %, insbesondere weniger als 0,05 %.

Eine weitere Gruppe geeigneter Polyester sind voll aromatische Polyester, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere werden Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

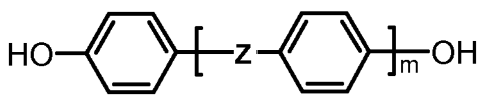

(I),

worin Z eine Alkylen- oder Cylcloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_8$-Alkyl- oder Alkoxygruppen oder Fluor, Chlor oder Brom als Substituenten tragen.

Als Stammkörper dieser Verbindungen seien beispielsweise Dihydroxydiphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, α,α'-Di-(hydroxyphenyl)-dialkylbenzol, Di-(hydroxyphenyl)sulfon, Di-(hydroxybenzoyl)benzol, Resorcin und Hydrochinon sowie deren kernalkylierte oder kernhalogenierte Derivate genannt. Von diesen werden 4,4'-Dihydroxydiphenyl, 2,4-Di-(4'-hydroxyphenyl)-2-methylbutan, α,α'-Di-(4-hydroxyphenyl)-p-diisopropylbenzol, 2,2-Di-(3'-methyl-4'-hydroxyphenyl)propan und 2,2-Di-(3'-chlor-4'-hydroxyphenyl)propan, sowie insbesondere 2,2-Di-(4'-hydroxyphenyl)propan 2,2-Di-(3',5-dichlordihydroxyphenyl)propan, 1,1-Di-(4'-hydroxyphenyl)cyclohexan, 3,4'-Dihydroxybenzophenon, 4,4'-Dihydroxydiphenylsulfon und 2,2-Di-(3',5'-dimethyl-4'-hydroxyphenyl)propan oder deren Mischungen bevorzugt.

Selbstverständlich können auch Mischungen aus Polyalkylenterephthalaten und vollaromatischen Polyestern eingesetzt werden. Diese enthalten im Allgemeinen 20 bis 98 Gew.-% des Polyalkylenterephthalats und 2 bis 80 Gew.-% des vollaromatischen Polyesters. Weiterhin können auch Polyesterblockcopolymere wie Copolyetherester verwendet werden. Derartige Produkte sind an sich bekannt und in der Literatur, zum Beispiel in US 3,651,014, beschrieben. Auch im Handel sind entsprechende Produkte erhältlich, zum Beispiel unter der Bezeichnung Hytrel® der Firma DuPont.

Mischungen von Polyalkylenterephthalaten B1 mit Styrolcopolymeren B2 können ebenfalls eingesetzt werden. Diese enthalten bevorzugt 60 bis 90 Gew.-% Polyalkylenterephthalat und 10 bis 40 Gew.-% des Styrolcopolymers. Besonders bevorzugt sind Mischungen mit 60 bis 80 Gew.-% Polyalkylenterephthalat und 20 bis 40 Gew.-% Styrolcopolymer.

Wenn die zweite Kunststoffkomponente B mindestens einen thermoplastischen Styrol(co)polymer B2 enthält, so ist dieses vorzugsweise ausgewählt aus der Gruppe bestehend aus Acrylnitril-Styrol-Acrylester (ASA), Acrylnitril-Butadien-Styrol-Copolymeren (ABS), Styrol-Acrylnitril-Copolymeren (SAN) sowie Mischungen daraus.

Eine bevorzugte Ausführung enthält als Styrolcopolymer B2 ein Styrol-Acrylnitril-Acrylsäure-Copolymer (ASA) mit der Zusammensetzung Styrol 20-40 Gew.-%, Acrylnitril 20-40 Gew.-%, Acrylsäure 20-40 Gew.-%, wobei die Summe der einzelnen Monomere 100 Gew.-% ergibt.

In einer besonders bevorzugten Ausführung ist das Polyalkylenterephthalat B1 Polybutylenterephthalat und das Styrolcopolymer B2 ein Styrol-Acrylnitril-Acrylsäure-Copolymer (ASA) mit der Zusammensetzung Styrol 20-40 Gew.-%, Acrylnitril 20-40 Gew.-%, Acrylsäure 20-40 Gew.-%, wobei die Summe der einzelnen Monomere 100 Gew.-% ergibt. Der Anteil von B1 beträgt 60 bis 80 Gew.-%, der Anteil von B2 20 bis 40 Gew.-%, die Anteile summieren sich zu 100 Gew.-% bezogen auf die Gesamtkunststoffmasse der Polymerkomponente B.

Die zweite Kunststoffkomponente B kann neben dem mindestens einen teilkristallinen, thermoplastischen Polyester B1 und gegebenenfalls dem mindestens einen thermoplastischen Styrol(co)polymer B2 auch eines oder mehrere Additive enthalten. Die Additive sind dabei ausgewählt aus der Gruppe bestehend aus faser- oder teilchenförmigen Füllstoffen, Zähmodifizierern, Flammschutzmitteln, Nukleierungsmitteln, Ruß, Pigmenten, Farbmitteln, Formtrennmitteln, Wärmealterungsstabilisatoren, Antioxidantien, Verarbeitungsstabilisatoren und Verträglichkeitsvermittlern.

Als faser- oder teilchenförmige Füllstoffe eignen sich zum Beispiel Kohlenstofffasern, Glasfasern, Glaskugeln, amorphe Kieselsäure, Asbest, Calciumsilikat, Calciummetasilikat, Magnesiumcarbonat, Calciumcarbonat, Kaolin, Kreide, gepulverter Quarz, Glimmer, Bariumsulfat und Feldspat. Die Füllstoffe werden dabei bevorzugt in Mengen von 0,1 bis 50 Gew.-%, besonders bevorzugt in Mengen von 10 bis 40 Gew.-% eingesetzt. Besonders bevorzugt sind faserförmige Füllstoffe und davon insbesondere bevorzugt sind Glasfasern. Der Anteil der Füllstoffe ist dabei bezogen auf die Gesamtmasse der zweiten Kunststoffkomponente B.

Zur besseren Verträglichkeit können die Füllstoffe mit einer organischen Verbindung oder einer Silanverbindung an ihrer Oberfläche behandelt sein.

Flammschutzmittel, die in der zweiten Kunststoffkomponente B enthalten sein können, sind vorzugsweise die gleichen, wie sie auch in der ersten Kunststoffkomponente A enthalten sein können.

Neben den genannten Additiven können weiterhin Stabilisatoren, Oxidationsverzögerer, Mittel gegen Wärmezersetzung und Zersetzung durch UV-Strahlung, Gleit- und Entformungsmittel, Färbemittel, beispielsweise Farbstoffe und Pigmente (auch Ruße), Keimbildungsmittel, Weichmacher usw. enthalten sein. Zudem können auch 0 bis 2 Gew.-% bezogen auf die Gesamtmasse der zweiten Kunststoffkomponente B fluorhaltige Ethylenpolymerisate enthalten sein.

Das Bauteil ist zum Beispiel ein Kunststoffteil wie es in der Elektrotechnik verwendet wird, ein Mechatronik-Bauteil oder ein Kunststoffgehäuse mit Steckkontakten.

Das Einlegeteil, das von der Kunststoffummantelung umschlossen wird, ist zum Beispiel ein Stanzgitter. In diesem Fall lässt sich das Bauteil zum Beispiel als Steckverbinder nutzen. Weiterhin kann das Einlegeteil auch ein Draht, ein Rundleiter, ein Flachleiter, eine flexible Folie oder eine Leiterplatte sein.

Bei Einsatz des Bauteils im Bereich der Automobilindustrie kann das Einlegeteil auch ein Fangband, ein Türfalle, ein Schloss, eine Gewindebuchse, ein Wälzlager, ein Blech, ein Draht für Stabilisatoren oder ein Bauteil aus Zinkdruckguss oder Aluminiumdruckguss für eine Türfeststelleinheit sein. Weiterhin ist es auch möglich, dass das Bauteil eine Klinge für ein Messer, eine Schere, ein Skalpell oder auch für einen Schraubendreher ist.

Das Einlegeteil ist vorzugsweise aus einem Metall gefertigt. Geeignete Metalle, aus denen das Einlegeteil gefertigt ist, sind zum Beispiel Kupfer und kupferhaltige Legierungen, beispielsweise CuSn6, CuSn0,15, CuBe, CuFe, CuZn37, CuSn4Zn6Pb3-C-GC (Rotguss) oder CuZn39Pb3 (Messing), Aluminium und aluminiumhaltige Legierungen, beispielsweise AlSi12Cu1, AlSi10Mg, Titan, Edelstahl, bleifreie Metalle und Metalllegierungen oder Werkstoffe mit einer Zinnauflage.

Die Erfindung betrifft weiterhin ein Verfahren zur Herstellung eines Bauteils, das ein Einlegeteil sowie eine Kunststoffummantelung aus mindestens zwei Kunststoffkomponenten umfasst, wobei das Verfahren folgende Schritte umfasst.

(a) Umhüllen eines Einlegeteils mit einer ersten Kunststoffkomponente A, wobei die erste Kunststoffkomponente A aufgebaut ist aus:

A1: 10 bis 100 Gew.-% mindestens eines thermoplastischen Styrol(co)-polymeren und

A2: 0 bis 50 Gew.-% mindestens eines thermoplastischen (Co-)Polyesters,
jeweils bezogen auf den Polymeranteil der ersten Kunststoffkomponente A,

(b) Formen einer äußeren Umhüllung aus einer zweiten Kunststoffkomponente B, wobei die zweite Kunststoffkomponente B aufgebaut ist aus:

B1: 50 bis 100 Gew.-% mindestens eines teilkristallinen, thermoplastischen Polyesters auf Basis von aromatischen Dicarbonsäuren und aliphatischen oder aromatischen Dihydroxyverbindungen und

B2: 0 bis 50 Gew.-% mindestens eines thermoplastischen Styrol(co)polymers,
jeweils bezogen auf den Polymeranteil der zweiten Kunststoffkomponente B,
wobei entweder zuerst das Einlegeteil mit der ersten Kunststoffkomponente A umhüllt und anschließend die zweite Kunststoffkomponente B aufgebracht wird oder zuerst die äußere Umhüllung B geformt wird und anschließend ein zwischen der äußeren Umhüllung aus der zweiten Kunststoffkomponente B und dem Einlegeteil gebildeter Hohlraum mit der ersten Kunststoffkomponente A gefüllt wird, um die Umhüllung des Einlegeteils zu bilden.

In einer bevorzugten Ausführungsform enthält die erste Kunststoffkomponente A 50 bis 100 Gew.-% des mindestens einen thermoplastischen Styrol(co)polymeren und insbesondere 70 bis 100 Gew.-%. Entsprechend ist der Anteil des mindestens einen thermoplastischen (Co-)Polyesters vorzugsweise 0 bis 50 Gew.-% und insbesondere 0 bis 30 Gew.-%. Besonders bevorzugt ist eine Ausführung, in der 70 bis 90 Gew.-% eines thermoplastischen Styrol(co)polymeren und 10 bis 30 Gew.-% eines thermoplastischen (Co)-Polyesters enthalten sind.

In einer bevorzugten Ausführungsform erfolgt das Umhüllen des Einlegeteils mit der ersten Kunststoffkomponente A in Schritt (a) durch einen Spritzgussprozess. Hierzu wird das Einlegeteil in ein Spritzgusswerkzeug eingelegt. Nach dem Einlegen des Einlegeteils wird das Werkzeug geschlossen und die Kunststoffformmasse in das Werkzeug eingespritzt. Die Kunststoffformmasse umhüllt das Einlegeteil zumindest partiell und bildet eine haftschlüssige Verbindung mit dem Einlegeteil aus. Es entsteht eine mediendichte Verbindung zwischen dem Einlegeteil und der Kunststoffkomponente A. Das Einspritzen der Kunststoffformmasse erfolgt dabei im Allgemeinen bei den für Spritzguss üblichen Drücken. Wenn jedoch zum Beispiel aufgrund ungleichmäßiger Umspritzung eine Verformung des Einlegeteils auftreten kann, ist es bevorzugt, dass das Einspritzen der Komponente A vorzugsweise bei einem maximalen Druck im Werkzeug von weniger als 900 bar, mehr bevorzugt von weniger als 600 bar, erfolgt. Durch den geringen Einspritzdruck wird vermieden, dass sich das Einlegeteil beim Umspritzen verformt. Nach dem Umspritzen des Einlegeteils erstarrt die erste Kunststoffkomponente A und wird fest. Ein weiterer Vorteil des Umspritzens des Einlegeteils mit der ersten Kunststoffkomponente A ist, dass das Einlegeteil durch diese Kunststoffumhüllung stabilisiert wird.

Bei der Umhüllung des Einlegeteils mit der ersten Kunststoffkomponente A können verschiedenste Geometrien realisiert werden. So kann zum Beispiel ein rechteckförmiger, rautenförmiger, fünfeckförmiger, achteckförmiger, kreis- oder ellipsenförmiger Querschnitt realisiert werden. Wenn die Kunststoffumhüllung aus der ersten Kunststoffkomponente A Ecken aufweist, können diese auch abgerundet sein.

Übergänge zwischen den Flächen der Umspritzung aus der ersten Kunststoffkomponente A können stumpfwinklig, spitzwinklig oder abgerundet sein. Auch können Schmelzlippen ausgeprägt sein, d.h. dünne, vorstehende Bereiche aus der ersten Kunststoffkomponente A. Diese werden dann durch die Überspritzung mit der zweiten Kunststoffkomponente B geschmolzen und verformt. Auf diese Weise wird eine stoffschlüssige Verbindung erzeugt.

Auch können überstehende Bereiche an der Umspritzung des Einlegeteils aus der ersten Kunststoffkomponente A ausgebildet sein. So kann die erste Kunststoffkomponente A das Einlegeteil zum Beispiel mit einem Querschnitt in Form eines Doppel-T umschließen. Durch die überstehenden Bereiche einer solchen Umspritzung mit der ersten Kunststoffkomponente A kann ein Formschluss erreicht werden. Da die erste Kunststoffkomponente A durch die Überspritzung mit der zweiten Kunststoffkomponente B im Allgemeinen angeschmolzen wird, kann sich die Geometrie der Vorumspritzung aus der ersten Kunststoffkomponente A generell ändern, wenn die Verarbeitungstemperatur der zweiten Kunststoffkomponente B oberhalb der Schmelztemperatur oder dem Erweichungspunkt der ersten Kunststoffkomponente A liegt. Auch kann die Vorumspritzung aus der ersten Kunststoffkomponente A durch den Druck der eingespritzten Schmelze bei der Umspritzung mit der zweiten Kunststoffkomponente B verformt werden. So können zum Beispiel scharfe Kanten der Vorumspritzung aus der ersten Kunststoffkomponente A abgerundet werden.

Nach dem Umhüllen des Einlegeteils mit der ersten Kunststoffkomponente A wird das so umhüllte Einlegeteil

mit der zweiten Kunststoffkomponente B umhüllt. Das Umhüllen mit der zweiten Kunststoffkomponente B erfolgt vorzugsweise ebenfalls durch einen Spitzgussprozess. Der Spritzgussprozess wird dabei im Allgemeinen mit den für Spritzguss üblichen Drücken durchgeführt. Wenn die Kunststoffformmasse mit geringem Einspritzdruck eingespritzt wurde, ist der Druck im Werkzeug dabei im Allgemeinen höher als der maximale Druck im Werkzeug in Schritt (a). Beim Einspritzen der zweiten Kunststoffkomponente B wird die erhärtete erste Kunststoffkomponente A bevorzugt an ihrer Oberfläche angeschmolzen, so dass eine besonders gute Haftung zwischen der ersten Kunststoffkomponente A und der zweiten Kunststoffkomponente B entsteht.

Das Umhüllen des Einlegeteils mit der ersten Kunststoffkomponente A in Schritt (a) und das Formen der äußeren Umhüllung aus der zweiten Kunststoffkomponente B in Schritt (b) kann im gleichen Spritzgusswerkzeug erfolgen. Hierzu ist es erforderlich, dass das Spritzgusswerkzeug zunächst einen Hohlraum umschließt, der der Form des Einlegeteils mit der Umhüllung aus der ersten Kunststoffkomponente A entspricht. Anschließend muss das Werkzeug so öffnen, dass die freie Form der Form des fertigen Bauteils entspricht. Entsprechende Werkzeuge sind dem Fachmann bekannt.

Alternativ ist es jedoch auch möglich, dass das Umhüllen des Einlegeteils mit der ersten Kunststoffkomponente A in Schritt (a) in einem ersten Werkzeug und das Formen der äußeren Umhüllung aus der zweiten Kunststoffkomponente B in Schritt (b) in einem zweiten Werkzeug erfolgt. In diesem Fall ist es erforderlich, dass das mit der ersten Kunststoffkomponente A umhüllte Einlegeteil aus dem ersten Werkzeug entnommen wird und vor dem Umspritzen mit der zweiten Kunststoffkomponente B in das zweite Werkzeug eingelegt wird. Wenn erwünscht ist, dass ein Verformen der Umhüllung des Einlegeteils aus der ersten Kunststoffkomponente A vermieden wird, ist es erforderlich, dass die erste Kunststoffkomponente A der anströmenden Schmelze der zweiten Kunststoffkomponente B einen ausreichenden mechanischen Widerstand entgegensetzt. Dazu ist eine ausreichende Steifigkeit und Festigkeit nötig, die vom Grad der Erstarrung der ersten Kunststoffkomponente A und dem Einspritzdruck der zweiten Kunststoffkomponente B abhängen. Um zu vermeiden, dass die Spritzgussmaschine nach jedem Spritzvorgang gereinigt werden muss, um das Material zu wechseln, ist es bevorzugt, dass für die erste Kunststoffkomponente A und die zweite Kunststoffkomponente B zwei unterschiedliche Spritzgießmaschinen beziehungsweise Plastifiziereinheiten eingesetzt werden. Wenn das Umhüllen in Schritt (a) und das Formen der äußeren Umhüllung in Schritt (b) mit dem selben Werkzeug erfolgt, ist es möglich, dass das Werkzeug mit beiden Spritzgießmaschinen gleichzeitig verbunden ist. Alternativ ist es auch möglich, das Werkzeug zunächst mit der Spritzgussmaschine zu verbinden, mit der die erste Kunststoffkomponente A eingespritzt wird und anschließend mit der Spritzgussmaschine, mit der die zweite Kunststoffkomponente B um das Einlegeteil mit der Umhüllung aus der ersten Kunststoffkomponente A umspritzt wird. Übliche Spritzgussmaschinen, die hierzu eingesetzt werden, sind zum Beispiel Spritzgussmaschinen mit Drehtellerwerkzeug. Bei diesen sind beispielsweise die Zylinder gegenüberliegend angeordnet und das Werkzeug wird jeweils zu dem Zylinder verdreht, aus dem als nächstes eingespritzt wird. Bei Verwendung von zwei unterschiedlichen Werkzeugen sind diese vorzugsweise jeweils mit einer Spritzgussmaschine verbunden. Als Spritzgussmaschine eignet sich jede beliebige, dem Fachmann bekannte Spritzgussmaschine.

Es ist möglich, dass in Schritt (b) nur Teile des mit der ersten Kunststoffkomponente A umhüllten Einlegeteils mit der zweiten Kunststoffkomponente B umhüllt werden. In diesem Fall ist es bevorzugt, dass die Bereiche mit der zweiten Kunststoffkomponente B umspritzt werden, die eine Außenfläche aufweisen, da durch die Umhüllung mit der zweiten Kunststoffkomponente B die Formteilmaßhaltigkeit gewährleistet wird. Alternativ ist es selbstverständlich auch möglich, dass das gesamte Einlegeteil mit der Umhüllung aus der ersten Kunststoffkomponente A mit der zweiten Kunststoffkomponente B umspritzt wird.

Bei der Verfahrensvariante, bei der zuerst die äußere Umhüllung aus der zweiten Kunststoffkomponente B geformt wird, wobei Bereiche des Einlegeteils nicht umhüllt werden, und in einem zweiten Schritt die nicht umhüllten Bereiche des Einlegeteils mit der ersten Kunststoffkomponente A umhüllt werden, erfolgt das Umhüllen des Einlegeteils mit der zweiten Kunststoffkomponente B vorzugsweise derart, dass diese Komponente das Einlegeteil in den Bereichen umhüllt, in denen Außenflächen vorhanden sind. Die Bereiche, die mit der ersten Kunststoffkomponente A vergossen werden, haben vorzugsweise keine nach außen weisenden Flächen. Auf diese Weise wird gewährleistet, dass das so hergestellte Bauteil form- und maßhaltig ist. Das Umhüllen des Einlegeteils mit der zweiten Kunststoffkomponente B erfolgt vorzugsweise durch einen Spritzgussprozess. Hierzu wird das Einlegeteil in ein Spritzgusswerkzeug eingelegt und anschließend mit der zweiten Kunststoffkomponente B umspritzt. Um zu vermeiden, dass die zweite Kunststoffkomponente B in die Bereiche eindringt, die ausgespart werden sollen, liegt das Werkzeug in diesen Bereichen am Einlegeteil an. Nach dem Umhüllen des Einlegeteils mit der zweiten Kunststoffkomponente B werden die Bereiche, die mit der ersten Kunststoffkomponente A umhüllt werden sollen, freigegeben. Hierzu ist es entweder möglich, dass im Werkzeug bewegliche Teile vorgesehen sind, die zunächst die Aussparungen formen und anschließend die Aussparungen zum Vergießen mit der ersten Kunststoffkomponente A freigeben oder das Einlegeteil, das mit der zweiten Kunststoffkomponente B umspritzt ist, wird dem Werkzeug entnommen und in ein zweites Werkzeug eingelegt, in dem die Bereiche, die mit der ersten Kunststoffkomponente A umhüllt werden sollen, freigehalten sind. Das Umhüllen mit der ersten Kunststoffkomponente A erfolgt vorzugsweise ebenfalls durch einen Spritzgussprozess. Dieser wird im Allgemeinen bei den für Spritzgussprozesse üblichen Drücken durchgeführt. Wenn zum Beispiel aufgrund ungleichmäßiger

Umspritzung eine Verformung des Einlegeteils auftreten kann, wird der Spritzgussprozess für die erste Kunststoffkomponente A vorzugsweise bei einem niedrigeren Druck durchgeführt als der Spritzgussprozess, mit dem die zweite Kunststoffkomponente B um das Einlegeteil umspritzt wird. Der Druck zum Umhüllen des Einlegeteils mit der ersten Kunststoffkomponente A liegt dann vorzugsweise unterhalb von 900 bar, bevorzugt unterhalb von 600 bar. Eine mediendichte Verbindung zwischen der ersten Kunststoffkomponente A und der zweiten Kunststoffkomponente B wird vorzugsweise dadurch erzielt, dass die Kunststoffkomponente B durch die Schmelze der ersten Kunststoffkomponente A an ihrer Oberfläche angeschmolzen wird, so dass zum Beispiel durch Interdiffusion eine besonders gute Haftung zwischen der ersten Kunststoffkomponente A und der zweiten Kunststoffkomponente B entsteht. Weiterhin ist es auch möglich, dass sich die erste Kunststoffkomponente A und die zweite Kunststoffkomponente B chemisch und/oder mechanisch verbinden. Eine chemische Verbindung kann zum Beispiel durch Reaktion der Polymerkomponenten der ersten Kunststoffkomponente A und der zweiten Kunststoffkomponente B entstehen, indem zum Beispiel kovalente Bindungen zwischen der ersten Kunststoffkomponente A oder einer Komponente der ersten Kunststoffkomponente A und der zweiten Kunststoffkomponente B oder einer Komponente der zweiten Kunststoffkomponente B geknüpft werden. Das Verfahren kann jederzeit auch so gestaltet werden, dass zwischen der ersten Kunststoffkomponente A und der zweiten Kunststoffkomponente B nicht nur eine gute Haftung sondern auch Formschluss besteht.

Die Schmelzetemperatur der ersten Kunststoffkomponente A bei der ersten Umspritzung des Einlegeteils liegt vorzugsweise im Bereich der im Spritzguss üblichen Verarbeitungstemperatur des zugrunde liegenden Polymers. Handelt es sich bei der ersten Kunststoffkomponente A um eine Mischung aus zwei Polymeren, wird die Schmelzetemperatur so hoch gewählt, dass beide Komponenten in flüssigem Zustand vorliegen.

Eine höhere Verarbeitungstemperatur führt zu einer leichter fließenden Schmelze, die die Oberfläche des Einlegeteils besser benetzen kann, wodurch eine höhere Verbundfestigkeit zwischen dem Material des Einlegeteils und der ersten Kunststoffkomponente A erzielt werden kann. Bei einer zu hohen Schmelzetemperatur kann es jedoch zu thermischem Abbau der ersten Kunststoffkomponente A beziehungsweise einer ihrer Komponenten A1 oder A2 kommen.

Bei der anschließenden Überspritzung des Bauteils mit der zweiten Kunststoffkomponente B liegt die Schmelzetemperatur der zweiten Kunststoffkomponente B vorzugsweise im Bereich der im Spritzguss üblichen Verarbeitungstemperatur des zugrunde liegenden Polymers. Handelt es sich bei der zweiten Kunststoffkomponente B um eine Mischung aus zwei Polymeren, wird die Schmelzetemperatur so hoch gewählt, dass beide Komponenten in flüssigem Zustand vorliegen.

Eine höhere Verarbeitungstemperatur führt zu einer leichter fließenden Schmelze, die die Oberfläche der Umhüllung aus der ersten Kunststoffkomponente A besser benetzen und/oder anschmelzen kann, wodurch eine höhere Verbundfestigkeit zwischen der zweiten Kunststoffkomponente B und der ersten Kunststoffkomponente A erzielt werden kann. Abhängig von der thermodynamischen Verträglichkeit der beiden Komponenten kann es zu einer mehr oder weniger dicken Grenzschicht kommen, die eine stoffschlüssige Verbindung der Kunststoffkomponenten A und der zweiten Kunststoffkomponente B darstellt, die durch Interdiffusion die Mediendichtheit verbessert. Vorzugsweise wird die Massetemperatur der zweiten Kunststoffkomponente B nicht so hoch eingestellt, dass die Umhüllung aus der ersten Kunststoffkomponente A vollständig geschmolzen und weggeschwemmt wird. Auch wird der Einspritzdruck für die zweite Kunststoffkomponente B vorzugsweise so gewählt, dass eine übermäßige Verformung der Umhüllung aus der ersten Kunststoffkomponente A, im schlimmsten Falle ein Wegschwimmen, vermieden wird.

Das erfindungsgemäße Bauteil ist zum Beispiel ein Kunststoffteil wie es in der Elektrotechnik verwendet wird. Auch ist es möglich, dass das Bauteil ein Mechatronikbauteil oder ein Kunststoffgehäuse mit Steckkontakten ist. Einsatz finden derartige Bauteile zum Beispiel als Sensoren, beispielsweise als Ölsensoren, Raddrehzahlsensoren, Drucksensoren usw., als Elektronikgehäuse, als Steuergehäuse, zum Beispiel im Bereich der ABS-, ESP-, der Getriebe-, der Airbag- oder der Motorensteuerung in Kraftfahrzeugen. Auch können die Bauteile zum Beispiel als Fensterheber-Module oder zur Scheinwerfer-Steuerung eingesetzt werden. Auch außerhalb der Automobilindustrie können die erfindungsgemäßen Bauteile zum Beispiel als Sensoren, als Füllstandsgeber oder als Rohleitungseinheiten verwendet werden. Weitere geeignete Verwendung für die erfindungsgemäßen Bauteile sind zum Beispiel Elektronik-Komponenten in Hausgeräten. Geeignete Bauteile sind zum Beispiel Relais, Spulenkörper, Schalterteile, Magnetventile, Elektrohandwerkzeuge, Steckvorrichtungen oder Steckverbinder.

Das erfindungsgemäße Bauteil aus dem Einlegeteil mit der Umhüllung aus der ersten Kunststoffkomponente A und der äußeren Umhüllung aus der zweiten Kunststoffkomponente B zeichnet sich dadurch aus, dass es entlang beider Grenzflächen, d.h. der Grenzfläche zwischen Einlegeteil und Umhüllung aus der ersten Kunststoffkomponente A und der Grenzfläche zwischen der ersten Kunststoffkomponente A und der zweiten Kunststoffkomponente B, mediendicht ist. Mediendichte Verbindung bedeutet dabei, dass die Leckrate nach einem Klimawechseltest mit mindestens 200 Zyklen, bei denen das zu prüfende Bauteil abwechselnd eine Temperatur von -40°C und +150°C unterworfen wird, kleiner als 0,5 $cm^3$/min ist. Die Leckrate wird üblicherweise mit einem Differenzdruckverfahren bei einem Prüfdruck von 0,5 bar bestimmt.

**Beispiele**

Es werden Probekörper aus einem Einlegeteil aus CuSn6 hergestellt, das mit einer ersten Kunststoffkomponente A und einer zweiten Kunststoffkomponente B umhüllt wird.

Zur Herstellung der Probekörper wird zunächst mit Hilfe eines Stanzwerkzeugs das Einlegeteil aus in Streifen geschnittenem CuSn6 gestanzt. Das Einlegeteil weist einen rechteckförmigen Rahmen auf, bei dem die gegenüberliegenden kurzen Seiten zusätzlich durch einen Steg in der Mitte miteinander verbunden sind. Das hergestellte Einlegeteil weist eine Länge von 30 mm, eine Breite von 10,5 mm und eine Höhe von 0,5 mm auf. Die Länge der Schlitze zwischen den äußeren Rahmenstegen und dem mittleren Steg beträgt 25 mm und die Breite der Schlitze 3 mm.

Nach dem Stanzen werden die Stanzteile mit Aceton von Ölen und Unreinheiten gereinigt. Für die Herstellung der Probekörper wird eine Spritzgießmaschine mit einem Schneckendurchmesser von 18 mm verwendet (Allrounder 270S der Firma Arburg). Die Schließkraft des Werkzeugs beträgt 500 kN, der Spritzdruck 1500 bar. Um den zentralen Bereich des Einlegeteils mit den drei Stegen wird eine quaderförmige Umspritzung erzeugt, wobei die Umhüllung aus der zweiten Kunststoffkomponente B die erste Kunststoffkomponente A vollständig umschließt. Die Umhüllung aus der ersten Kunststoffkomponente A weist eine Länge von 15 mm, eine Breite von 4,5 mm und eine Dicke von 1,5 mm auf, die Umhüllung aus der zweiten Kunststoffkomponente B, die die erste Kunststoffkomponente A vollständig umschließt, eine Länge von 20 mm, eine Breite von 13 mm und eine Dicke von 4,5 mm. Die Anspritzung des Einlegeteils mit der ersten Kunststoffkomponente A und des mit der ersten Kunststoffkomponente A umhüllten Einlegeteils mit der zweiten Kunststoffkomponente B erfolgt nahezu an der Trennebene.

Um die Materialien zu prüfen, werden die Bauteile mit der Umhüllung aus der ersten Kunststoffkomponente A und der Umhüllung aus der zweiten Kunststoffkomponente B einer Temperaturschockstressung mit bis zu 500 Zyklen unterzogen. Hierbei galt für einen Temperaturschockzyklus folgendes Protokoll: 15 Minuten Lagerung bei 150°C, Temperaturwechsel auf -40°C innerhalb von 10 Sekunden, 15 Minuten Lagerung bei -40°C, Temperaturwechsel auf 150°C innerhalb von 10 Sekunden. Die Temperaturschockbehandlung erfolgt in einem Temperaturschockschrank VT 7030S2 der Firma Vötsch. Die Messung der Dichtheit mittels Differenzdruckverfahren erfolgte vor der Stressung sowie nach 100, 200 und gegebenenfalls 500 Zyklen.

Für die Differenzdruckmessung werden zwei Volumina, ein Prüfvolumen und ein Vergleichsvolumen mit dem gleichen Druck beaufschlagt. Ist das Prüfvolumen undicht, stellt sich eine Druckdifferenz ein, die direkt gemessen werden kann. Alternativ kann der Druckabfall pro Zeit gemessen werden. In der vorliegenden Ausführung wurde der Prüfkörper an seinem äußeren Umfang dicht in eine Halterung eingespannt und von der Unterseite mit Druck beaufschlagt. Die Abdichtung erfolgte durch einen Gummidichtring. Nur in Richtung des Einlegeteils auftretende Undichtigkeiten zwischen Einlegeteil und der Umhüllung aus der ersten Kunststoffkomponente A oder der Umhüllung aus der ersten Kunststoffkomponente A und der Umhüllung aus der zweiten Kunststoffkomponente B führen zu einer Undichtigkeit des Prüfvolumens, wie im Blindversuch mit einem soliden Prüfkörper aus der Komponente B1 gezeigt wurde. Das eingesetzte Prüfmedium war Luft. Das Prüfvolumen $V_{prüf}$ betrug 36 ml. Die Füllzeit der Volumina mit einem Prüfdruck von 0,5 bar betrug 5 Sekunden. Nach 10 Sekunden Beruhigungszeit wurde für $\Delta t_{prüf}$ = 5 Sekunden der Druckabfall gemessen. Anschließend wurden die Volumina innerhalb von 2 Sekunden geleert. Aus dem differentiellen Druckabfall wurden die Leckraten nach Boyle-Marriotte errechnet:

$$Q_{leck}\ [\text{ml/min}] = \frac{V_{prüf} \cdot \Delta p}{\Delta t_{prüf} \cdot 1000\ \text{mbar}}$$

Mit einer Universalprüfmaschine (Zwick 1446) wurde die Kraft, die benötigt wird, um das Einlegeteil aus der Umhüllung aus den Kunststoffkomponenten A und B herauszuziehen, im Zugversuch bestimmt. Hierfür wurde das Spritzgussteil an der Kunststoffumhüllung in die Maschine eingespannt und parallel zum Gitterverlauf am Stanzgitter gezogen. Gemessen wurde die Kraft, die aufgewendet werden muss, um das Stanzgitter relativ zur Kunststoffumhüllung zu bewegen.

Die Ergebnisse sind in Tabelle 1 zusammengefasst.

Tabelle 1: Versuchsergebnisse

| *Tab. 4* | | **Vgl. 1** | **Bsp. 1** | **Bsp. 2** | **Bsp. 3** | **Bsp. 4** | **Bsp. 5** | **Bsp. 6** | **Vgl. 2** | **Vgl. 3** | **Vgl. 4** | **Vgl. 5** | **Bsp. 7** | **Bsp. 8** | **Bsp.9** |
|---|---|---|---|---|---|---|---|---|---|---|---|---|---|---|---|
| A1 | [Gew.-%] | 100 | | | | | | | | | | 70 | | | |
| A2 | [Gew.-%] | | 100 | | | | | | | | | | | | |
| A3 | [Gew.-%] | | | 100 | 70 | 90 | 97 | | | | | | 70 | 70 | 70 |
| A4 | [Gew.-%] | | | | 30 | | | | | 100 | | 30 | 30 | 30 | |
| A5 | [Gew.-%] | | | | | | | | | | 100 | | | | |
| A6 | [Gew.-%] | | | | | 10 | | | | | | | | | |
| A7 | [Gew.-%] | | | | | | 3 | | | | | | | | |
| A8 | [Gew.-%] | | | | | | | 100 | | | | | | | |
| A9 | [Gew.-%] | | | | | | | | 100 | | | | | | |
| A10 | | | | | | | | | | | | | | | 30 |
| B1 | [Gew.-%] | 100 | 100 | 100 | 100 | 100 | 100 | 100 | 100 | 100 | 100 | 100 | | | 100 |
| B2 | | | | | | | | | | | | | 100 | | |
| B3 | | | | | | | | | | | | | | 100 | |
| Leckrate nach Spritzguss | [ml/min] | 0,3 | 0,3 | 0,33 | 0,25 | 0,1 | 0,16 | 0,24 | 0,4 | -- | 1,1 | 0,13 | 0,28 | 0,2 | 0,3 |
| STAB | [ml/min] | 0,1 | 0,1 | 0,05 | 0,05 | 0,02 | 0,04 | 0,06 | 0,2 | -- | 0,3 | 0,06 | 0,08 | 0,1 | 0,07 |
| Leckrate nach 100 Zyklen | [ml/min] | 2,7 | 0,3 | 0,3 | 0,3 | 0,5 | 0,2 | 0,2 | 4 | -- | -- | 2,3 | 0,4 | 0,3 | 0,3 |
| STAB | [ml/min] | 0,7 | 0,2 | 0,2 | 0,1 | 0,2 | 0,1 | 0,1 | 0,8 | -- | -- | 0,6 | 0,1 | 0,1 | 0,1 |
| Leckrate nach 500 Zyklen | [ml/min] | -- | 0,8 | 0,1 | 0,3 | 0,7 | 0,2 | 0,2 | -- | -- | -- | -- | 0,3 | 0,35 | 0,2 |
| STAB | [ml/min] | -- | 0,4 | 0,1 | 0,09 | 0,3 | 0,1 | 0,1 | -- | -- | -- | -- | 0,1 | 0,05 | 0,1 |
| Auszugskraft nach Spritzguss | [N] | 160 | -- | 230 | -- | -- | 280 | -- | -- | -- | -- | -- | -- | -- | -- |
| Auszugskraft nach 500 Zyklen | [N] | 625 | -- | 700 | -- | -- | 750 | -- | -- | -- | -- | -- | -- | -- | -- |

**Komponente A1** ist ein statistisches Copolyamid aufgebaut aus den Monomeren Adipinsäure (15 Gew.-%), Hexamethylendiamin (15 Gew.-%), ε-Caprolactam (35 Gew.-%) und 4,4'-Diaminodicyclohexylmethan (35 Gew.-%). Das Material hat eine Viskositätszahl von 120 ml/g, gemessen an 0,5 g/100ml Lösung in 96% [m/m] H2SO4 nach ISO 307. Es hat eine Vicat Erweichungstemperatur von 68°C, bestimmt nach EN ISO 306:2004 und einen E-Modul von 2500 MPa, bestimmt nach DIN EN ISO 527-2 DE.

**Komponente A2** ist ein Copolymer aus den Monomeren Styrol (30 Gew.-%), α-Methylstyrol (25 Gew.-%), und Acrylnitril (25 Gew.-%) enthaltend eine partikelförmige Butylacrylatphase (20 Gew.-%), mit einem E-Modul von 2500 MPa (ISO 527-2) und einer Vicat-Erweichungstemperatur nach ISO 306 von 104°C.

**Komponente A3** ist ein Copolymer aus den Monomeren Styrol (40 Gew.-%), α-Methylstyrol (30 Gew.-%), und Acrylnitril (20 Gew.-%) enthaltend eine Butadienphase (10 Gew.-%), mit einem E-Modul von 2400 MPa und einer Vicat Erweichungstemperatur von 115°C.

**Komponente A4** ist ein statistischer Copolyester aus Terephthalsäure (25 mol-%), 1,4-Butandiol (50 mol-%) und Adipinsäure (25 mol-%) mit Schmelzpunkt 110-120°C (DSC-Messung nach ISO 11357-3) und Shore D Härte von 32, bestimmt nach ISO 868. Die Vicat Erweichungstemperatur beträgt 91°C, gemessen nach EN ISO 306:2004.

**Komponente A5** ist ein Polybutylenterephthalat mit Viskositätszahl 130 ml/g, gemessen in 0,5%-Lösung in Phenol/o-Dichlorbenzol (1:1) gemäß ISO 1628. Das Material hat einen E-Modul von 2500 MPa (ISO 527-2) und einen Schmelzbereich von 220-225°C (DSC-Messung nach ISO 11357-3).

**Komponente A6** ist ein Polybutylenterephthalat mit Viskositätszahl 107 ml/g, gemessen in 0,5%-Lösung in Phenol/o-Dichlorbenzol (1:1) gemäß ISO 1628. Das Material hat einen E-Modul von 2500 MPa (ISO 527-2) und einen Schmelzbereich von 220-225°C (DSC-Messung nach ISO 11357-3).

**Komponente A7** ist ein epoxyfunktionalisiertes Styrol-Acrylsäure-Copolymer mit Molekulargewicht $M_w$ von 6800 g/mol und einem Funktionalisierungsgrad von mehr als vier Epoxygruppen pro Molekülkette. Der Glasübergang liegt bei 54°C.

**Komponente A8** enthält zu 70 Gew.-% Komponente A3 und zu 30 Gew.-% solide Mikroglaskugeln mit mittlerem Durchmesser zwischen 12 und 26μm (gemessen mit CILAS).

**Komponente A9** ist ein Polybutylenterephthalat mit 30 Gew.-% soliden Glaskugeln. Das Material hat eine Viskositätszahl von 113 ml/g, gemessen in 0,5%-Lösung in Phenol/o-Dichlorbenzol (1:1) gemäß ISO 1628, einen E-Modul von 4000 MPa (ISO 527-2) und einen Schmelzbereich von 220-225°C (DSC-Messung nach ISO 11357-3).

**Komponente A10** ist ein statistischer Copolyester aus Terephthalsäure (25 mol-%), 1,4-Butandiol (50 mol-%) und Sebacinsäure (25 mol-%) mit Schmelzpunkt 100-115°C (DSC-Messung nach ISO 11357-3). Die Vicat Erweichungstemperatur beträgt 70-85°C, gemessen nach EN ISO 306:2004.

**Komponente B1** ist ein Polybutylenterephthalat mit 30 Gew.-% Glasfasern mit Viskositätszahl 102 g/ml, gemessen in 0,5%-Lösung in Phenol/o-Dichlorbenzol (1:1) gemäß ISO 1628. Es enthält zudem 0,1 Gew.-% eines Ofenrußes mit mittlerer Teilchengröße zwischen 10 und 35nm (CILAS) und einer BET-Oberfläche von 110-120 m2/g (ISO 9277), sowie 0,5 Gew.-% Pentaerythritoltetrastearat als Schmiermittel. Das Material hat einen E-Modul von 10000 MPa (ISO 527-2) und einen Schmelzbereich von 220-225°C (DSC-Messung nach ISO 11357-3). Die Glasfasern haben einen Durchmesser von 10μm.

**Komponente B2** ist ein Blend aus Polybutylenterephthalat und Polyethylenterephthalat (30% PET bezogen auf den Polymergehalt der Komponente B2) enthaltend 30 Gew.-% Glasfasern, mit Viskositätszahl 105 g/ml, gemessen in 0,5%-Lösung in Phenol/o-Dichlorbenzol (1:1) gemäß ISO 1628. B2 enthält zudem 0,1 Gew.-% eines Ofenrußes mit mittlerer Teilchengröße zwischen 10 und 35nm (CILAS) und einer BET-Oberfläche von 110-120 m2/g (ISO 9277), sowie 0,5 Gew.-% Pentaerythritoltetrastearat als Schmiermittel. Das Material hat einen E-Modul von 10500 MPa (ISO 527-2) und einen Schmelzbereich von 220-250°C (DSC-Messung nach ISO 11357-3). Die Glasfasern haben einen Durchmesser von 10μm.

**Komponente B3** ist ein Blend aus Polybutylenterephthalat und einem Styrol-Acrylnitril-Acrylsäure-Copolymer (ASA) (30% ASA bezogen auf den Polymergehalt der Komponente B3), enthaltend 30 Gew.-% Glasfasern, mit Viskositätszahl 105 g/ml, gemessen in 0,5%-Lösung in Phenol/o-Dichlorbenzol (1:1) gemäß ISO 1628. Das ASA hat die Zusammensetzung Styrol 45 Gew.-%, Acrylnitril 10 Gew.-%, Acrylsäure 45 Gew.-%. B3 enthält zudem 0,1 Gew.-% eines Ofenrußes mit mittlerer Teilchengröße zwischen 10 und 35nm (CILAS) und einer BET-Oberfläche von 110-120 m2/g (ISO 9277), sowie 0,5 Gew.-% Pentaerythritoltetrastearat als Schmiermittel. Das Material hat einen E-Modul von 9700 MPa (ISO 527-2) und einen Schmelzbereich von 220-225°C (DSC-Messung nach ISO 11357-3). Die Glasfasern haben einen Durchmesser von 10μm.

In der Tabelle steht Vgl. für Vergleichsbeispiel und Bsp. für erfindungsgemäßes Beispiel. STAB in Tabelle 1 steht für Standardabweichung.

Die Verarbeitungsbedingungen für die Umhüllung aus der ersten Kunststoffkomponente A der einzelnen Vergleichsbeispiele und erfindungsgemäßen Beispiele sind in Tabelle 2 zusammengefasst.

Tabelle 2: Verarbeitungsbedingungen für die erste Kunststoffkomponente A

| | Vgl. 1 | Bsp. 1 | Bsp. 2 | Bsp. 3 | Bsp. 4 | Bsp. 5 | Bsp. 6 |
|---|---|---|---|---|---|---|---|
| Massetemperatur [°C] | 270 | 250 | 250 | 250 | 250 | 250 | 250 |
| Werkzeugtemperatur [°C] | 30 | 60 | 60 | 60 | 60 | 60 | 60 |
| Nachdruck [bar] | 700 | 700 | 700 | 600 | 600 | 600 | 600 |
| Einspritzgeschwindigkeit [mm/s] | 160 | 160 | 160 | 160 | 160 | 160 | 160 |
| Kühlzeit [s] | 25 | 20 | 20 | 25 | 20 | 20 | 20 |
| Nachdruckdauer [s] | 5 | 5 | 5 | 5 | 5 | 5 | 5 |
| | | | | | | | |
| (Forts.) | **Vgl. 2** | **Vgl. 3** | **Vgl. 4** | **Vgl. 5** | **Bsp. 7** | **Bsp. 8** | **Bsp. 9** |
| Massetemperatur [°C] | 260 | 170 | 250 | 210 | 250 | 250 | 250 |
| Werkzeugtemperatur [°C] | 60 | 30 | 60 | 40 | 60 | 60 | 60 |
| Nachdruck [bar]<br>Einspritzgeschwindigkeit [mm/s] | 700<br>160 | 600<br>120 | 600<br>160 | 700<br>160 | 600<br>160 | 600<br>160 | 600<br>160 |
| Kühlzeit [s] | 15 | 25 | 25 | 35 | 25 | 25 | 25 |
| Nachdruckdauer [s] | 5 | 5 | 5 | 5 | 5 | 5 | 5 |

Für die Bildung der äußeren Umhüllung aus der zweiten Kunststoffkomponente B gelten die in Tabelle 3 aufgeführten Parameter.

Tabelle 3: Verarbeitungsparameter für die zweite Kunststoffkomponente B

| | B1 | B2 | B3 |
|---|---|---|---|
| Massetemperatur [°C] | 260 | 270 | 260 |
| Werkzeugtemperatur [°C] | 80 | 80 | 80 |
| Nachdruck [bar] | 700 | 650 | 700 |
| Einspritzgeschwindigkeit [mm/s] | 160 | 160 | 160 |
| Kühlzeit [s] | 12 | 12 | 12 |
| Nachdruckdauer [s] | 5 | 5 | 5 |

Die Beispiele zeigen die Verbesserung der Eigenschaften eines Bauteils aus einem metallischen Einlegeteil, das mit einer ersten Kunststoffkomponente A und einer zweiten Kunststoffkomponente B umhüllt ist, wenn Styrol(co)polymere als erste Kunststoffkomponente A oder als Bestandteil der ersten Kunststoffkomponente A eingesetzt werden. Besonders gute Eigenschaften zeigen Mischungen aus Styrol(co)polymer und (Co)polyester (Beispiele 3, 4 und 9 verglichen mit dem Vergleichsbeispielen 1 und 6). Formspritzungen mit reinen (Co)polyestern aus den Beispielen 3 und 4 sind in den Vergleichsbeispielen 3 und 4 eingesetzt worden, die entsprechenden Spritzgussteile waren entweder nicht herstellbar (Vergleichsversuch 3) oder zeigten direkt nach Spritzguss schon hohe Leckagen (Vergleichsbeispiel 4).

Durch Zufügen eines Haftvermittlers zu Styrolcopolymeren A1 der ersten Kunststoffkomponente A nimmt die Auszugskraft vor und nach der Temperaturstressung bei gleich guter Mediendichtheit zu (Beispiel 5 verglichen mit Beispiel 2).

Glaskugeln als Füllstoff der ersten Kunststoffkomponente A erhöhen ebenfalls die Mediendichtheit des Bauteils, insbesondere nach Temperaturstressung (Beispiel 6 verglichen mit Beispiel 2). Ein Verbund mit reinem glaskugelgefülltem Polyester als erster Kunststoffkomponente A versagt dagegen nach Temperaturlagerung (Vergleichsbeispiel 2).

Bei der Umhüllung aus der zweiten Kunststoffkomponente B ist mit Mischungen aus Polyestern (Beispiel 7) oder Polyester und Styrolcopolymer (Beispiel 8) ebenso gute Verbunddichtheit zu erreichen wie mit reinem Polyester (Vergleiche mit Beispiel 3).

## Patentansprüche

1. Bauteil, umfassend ein Einlegeteil sowie eine Kunststoffummantelung aus mindestens zwei Kunststoffkomponenten, wobei das Einlegeteil von einer ersten Kunststoffkomponente A umschlossen wird und die erste Kunststoffkomponente A von einer zweiten Kunststoffkomponente B umschlossen ist, um eine mediendichte Verbindung entlang der Grenzfläche zwischen dem Einlegeteil und der Umhüllung aus der ersten Kunststoffkomponente A sowie entlang der Grenzfläche zwischen der ersten Kunststoffkomponente A und der zweiten Kunststoffkomponente B zu erhalten, so dass die mit einem Differenzdruckverfahren bei einem Prüfdruck von 0,5 bar bestimmte Leckrate nach einem Klimawechseltest mit mindestens 200 Zyklen, bei denen das zu prüfende Bauteil abwechselnd einer Temperatur von -40°C und +150°C unterworfen wird, kleiner als 0,5 $cm^3$/min ist, **dadurch gekennzeichnet, dass** die erste Kunststoffkomponente A aufgebaut ist aus:

   A1: 10 bis 100 Gew.-% mindestens eines thermoplastischen Styrol(co)-polymeren und
   A2: 0 bis 90 Gew.-% mindestens eines thermoplastischen (Co-)Polyesters,
   jeweils bezogen auf den Polymeranteil der ersten Kunststoffkomponente A
   und die zweite Kunststoffkomponente B aufgebaut ist aus
   B1: 50 bis 100 Gew.-% mindestens eines teilkristallinen, thermoplastischen Polyesters auf Basis von aromatischen Dicarbonsäuren und aliphatischen oder aromatischen Dihydroxyverbindugen und
   B2: 0 bis 50 Gew.-% mindestens eines thermoplastischen Styrol(co)polymers,
   jeweils bezogen auf den Polymeranteil der zweiten Kunststoffkomponente B und wobei die erste Kunststoffkomponente A und die zweite Kunststoffkomponente B unterschiedliche Zusammensetzungen aufweisen.

2. Bauteil gemäß Anspruch 1, **dadurch gekennzeichnet, dass** das thermoplastische Styrol(co)polymer A1 ausgewählt ist aus der Gruppe bestehend aus Styrol-Butadien-Copolymeren, Styrol-Acrylnitril-Copolymeren, $\alpha$-Methylstyrol-Acrylnitril-Copolymeren, Styrol-Acrylnitril-Copolymeren mit partikelförmiger Kautschukphase aus Dienpolymerisaten oder Alkylacrylaten und $\alpha$-Methylstyrol-Acrylnitril-Copolymeren mit partikelförmiger Kautschukphase aus Dienpolymerisaten oder Alkylacrylaten, wobei die von Styrol verschiedenen Monomereinheiten jeweils mit einem Anteil von 15 bis 40 Gew.-% in den Copolymeren enthalten sind.

3. Bauteil gemäß Anspruch 2, **dadurch gekennzeichnet, dass** das thermoplastische Styrol(co)polymer A1 zusätzlich $\alpha$-Methylstyrol oder n-Phenylmaleinimid mit einem Anteil von 0 bis 70 Gew.-%, bezogen auf die Masse des Styrol(co)polymers A1, enthält.

4. Bauteil gemäß einem der Ansprüche 1 bis 3, **dadurch gekennzeichnet, dass** der thermoplastische Polyester A2 ausgewählt ist aus der Gruppe bestehend aus Polyethylenterephthalat, Polytrimethylenterephthalat, Polybutylenterephthalat und Copolyester aus einer oder mehreren Disäuren mit einem oder mehreren Diolen und gegebenenfalls mit einem oder mehreren Lactonen.

5. Bauteil gemäß einem der Ansprüche 1 bis 4, **dadurch gekennzeichnet, dass** mindestens einer der thermoplastischen Polyester A2 der ersten Kunststoffkomponente A einen niedrigeren Schmelzpunkt aufweist als der Polyester B1 der zweiten Kunststoffkomponente B oder eine Glasübergangstemperatur aufweist, die niedriger ist als der Schmelzpunkt des Polyesters B1 der zweiten Kunststoffkomponente.

6. Bauteil gemäß einem der Ansprüche 1 bis 5, **dadurch gekennzeichnet, dass** der teilkristalline, thermoplastische Polyester B1 der zweiten Kunststoffkomponente B ein Polyalkylenterephthalat ist oder eine Mischung aus mindestens zwei unterschiedlichen Polyalkylenterephthalaten, wobei das Polyalkylenterephthalat vorzugsweise 2 bis 10 C-Atome im Alkoholteil aufweist.

7. Bauteil gemäß Anspruch 6, **dadurch gekennzeichnet, dass** das Polyalkylenterephthalat ein Polyethylenterephthalat, Polytrimethylenterephthalat, Polypropylenterephthalat, Polybutylenterephthalat oder eine Mischung aus mindestens zwei dieser Polyalkylenterephthalate ist.

8. Bauteil gemäß einem der Ansprüche 1 bis 7, **dadurch gekennzeichnet, dass** das thermoplastische Styrol(co)polymer B2 ausgewählt ist aus der Gruppe bestehend aus Acrylnitril-Styrol-Acrylester, Acrylnitril-Butadien-Styrol-Copolymeren, Styrol-Acrylnitril-Copolymeren sowie Mischungen daraus.

9. Bauteil gemäß einem der Ansprüche 1 bis 8, **dadurch gekennzeichnet, dass** die erste Kunststoffkomponente A und/oder die zweite Kunststoffkomponente B weiterhin eines oder mehrere Additive enthält, ausgewählt aus der

Gruppe bestehend aus faser- oder teilchenförmige Füllstoffe, Zähmodifizierer, Flammschutzmittel, Nukleierungsmittel, Ruß, Pigmente, Farbmittel, Formtrennmittel, Wärmealterungsstabilisatoren, Antioxidantien, Verarbeitungsstabilisatoren und Verträglichkeitsvermittler.

**10.** Bauteil gemäß einem der Ansprüche 1 bis 9, **dadurch gekennzeichnet, dass** die erste Kunststoffkomponente A 0,1 bis 40 Gew.-% Glaskugeln, bezogen auf die Gesamtmasse der ersten Kunststoffkomponente A, enthält.

**11.** Bauteil gemäß einem der Ansprüche 1 bis 10, **dadurch gekennzeichnet, dass** die zweite Kunststoffkomponente B 0,1 bis 50 Gew.-% faserförmige Füllstoffe, insbesondere Glasfasern, bezogen auf die Gesamtmasse der zweiten Kunststoffkomponente B, enthält.

**12.** Bauteil gemäß einem der Ansprüche 1 bis 11, **dadurch gekennzeichnet, dass** das Einlegeteil aus Kupfer, einer kupferhaltigen Legierung, Aluminium, einer aluminiumhaltigen Legierung, Titan, Edelstahl, einem bleifreiem Metall oder Metalllegierung oder einem Werkstoff mit Zinnauflage gefertigt ist.

**13.** Bauteil gemäß einem der Ansprüche 1 bis 12, **dadurch gekennzeichnet, dass** das Bauteil ein Kunststoffteil, wie es in der Elektroniktechnik verwendet wird, ein Mechatronik-Bauteil oder ein Kunststoffgehäuse mit Steckkontakten ist.

**14.** Verfahren zur Herstellung eines Bauteils gemäß einem der Ansprüche 1 bis 13, folgende Schritte umfassend:

(a) Umhüllen eines Einlegeteils mit einer ersten Kunststoffkomponente A, wobei die erste Kunststoffkomponente A aufgebaut ist aus:

A1: 50 bis 100 Gew.-% mindestens eines thermoplastischen Styrol(co)-polymeren und
A2: 0 bis 50 Gew.-% mindestens eines thermoplastischen (Co-)Polyesters,
jeweils bezogen auf den Polymeranteil der ersten Kunststoffkomponente A,

(b) Formen einer äußeren Umhüllung aus einer zweiten Kunststoffkomponente B, wobei die zweite Kunststoffkomponente B aufgebaut ist aus:

B1: 50 bis 100 Gew.-% mindestens eines teilkristallinen, thermoplastischen Polyesters auf Basis von aromatischen Dicarbonsäuren und aliphatischen oder aromatischen Dihydroxyverbindugen und
B2: 0 bis 50 Gew.-% mindestens eines thermoplastischen Styrol(co)polymers,
jeweils bezogen auf den Polymeranteil der zweiten Kunststoffkomponente B,

wobei entweder zuerst das Einlegeteil mit der ersten Kunststoffkomponente A umhüllt wird und anschließend die zweite Kunststoffkomponente B aufgebracht wird oder zuerst die äußere Umhüllung B geformt wird und anschließend ein zwischen der äußeren Umhüllung aus der zweiten Kunststoffkomponente B und dem Einlegeteil gebildeter Hohlraum mit der ersten Kunststoffkomponente A gefüllt wird, um die Umhüllung des Einlegeteils zu bilden.

**15.** Verfahren gemäß Anspruch 14, **dadurch gekennzeichnet, dass** die Umhüllung des Einlegeteils mit der ersten Kunststoffkomponente A und die Umhüllung aus der zweiten Kunststoffkomponente B durch ein Spritzgießverfahren hergestellt werden.

## Claims

**1.** A component comprising an insert part and plastics jacketing composed of at least two plastics components, where the insert part is enclosed by a first plastics component A and there is a second plastics component B enclosing the first plastics component A, the aim being to obtain a leakproof connection along the interface between the insert part and the jacketing made of the first plastics component A, and also along the interface between the first plastics component A and the second plastics component B, in a manner such that the leakage rate determined by a differential-pressure method at a test pressure of 0.5 bar in a test under changing climatic conditions using at least 200 cycles in which the component to be tested is subjected in alternation to a temperature of -40°C and of 150°C is smaller than 0.5 $cm^3$/min, wherein the first plastics component A is composed of:

A1: from 10 to 100% by weight of at least one thermoplastic styrene (co)polymer and

A2: from 0 to 90% by weight of at least one thermoplastic (co)polyester,
in each case based on the polymer content of the first plastics component A,
and the second plastics component B is composed of
B1: from 50 to 100% by weight of at least one semicrystalline, thermoplastic polyester based on aromatic dicarboxylic acids and on aliphatic or aromatic dihydroxy compounds and
B2: from 0 to 50% by weight of at least one thermoplastic styrene (co)polymer,
in each case based on the polymer content of the second plastics component B, and where the first plastics component A and the second plastics component B have different constitutions.

**2.** The component according to claim 1, wherein the thermoplastic styrene (co)polymer A1 has been selected from the group consisting of styrenebutadiene copolymers, styrene-acrylonitrile copolymers, $\alpha$-methylstyrene-acrylonitrile copolymers, styrene-acrylonitrile copolymers with particulate rubber phase composed of diene polymers or alkyl acrylates and $\alpha$-methylstyrene-acrylonitrile copolymers with particulate rubber phase composed of diene polymers or alkyl acrylates, where the proportion comprised of each of the monomer units other than styrene in the copolymers is from 15 to 40% by weight.

**3.** The component according to claim 2, wherein the thermoplastic styrene (co)polymer A1 also comprises a proportion of from 0 to 70% by weight, based on the weight of the styrene (co)polymer A1, of $\alpha$-methylstyrene or n-phenylmaleimide.

**4.** The component according to any of claims 1 to 3, wherein the thermoplastic polyester A2 has been selected from the group consisting of polyethylene terephthalate, polytrimethylene terephthalate, polybutylene terephthalate, and copolyesters composed of one or more diacids with one or more diols and optionally with one or more lactones.

**5.** The component according to any of claims 1 to 4, wherein at least one of the thermoplastic polyesters A2 of the first plastics component A has a lower melting point than the polyester B1 of the second plastics component B, or has a glass transition temperature lower than the melting point of the polyester B1 of the second plastics component.

**6.** The component according to any of claims 1 to 5, wherein the semicrystalline, thermoplastic polyester B1 of the second plastics component B is a polyalkylene terephthalate or a mixture composed of at least two different polyalkylene terephthalates, where the polyalkylene terephthalate preferably has from 2 to 10 carbon atoms in the alcohol moiety.

**7.** The component according to claim 6, wherein the polyalkylene terephthalate is a polyethylene terephthalate, polytrimethylene terephthalate, polypropylene terephthalate, polybutylene terephthalate, or a mixture composed of at least two of these polyalkylene terephthalates.

**8.** The component according to any of claims 1 to 7, wherein the thermoplastic styrene (co)polymer B2 has been selected from the group consisting of acrylonitrile-styrene-acrylate, acrylonitrile-butadiene-styrene copolymers, styrene-acrylonitrile copolymers, and mixtures thereof.

**9.** The component according to any of claims 1 to 8, wherein the first plastics component A and/or the second plastics component B also comprises one or more additives, selected from the group consisting of fibrous or particulate fillers, impact modifiers, flame retardants, nucleating agents, carbon black, pigments, colorants, mold-release agents, heat-aging stabilizers, antioxidants, processing stabilizers, and compatibilizers.

**10.** The component according to any of claims 1 to 9, wherein the first plastics component A comprises from 0.1 to 40% by weight of glass beads, based on the total weight of the first plastics component A.

**11.** The component according to any of claims 1 to 10, wherein the second plastics component B comprises from 0.1 to 50% by weight of fibrous fillers, in particular glass fibers, based on the total weight of the second plastics component B.

**12.** The component according to any of claims 1 to 11, wherein the insert part has been manufactured from copper, from a copper-containing alloy, from aluminum, from an aluminum-containing alloy, from titanium, from stainless steel, from a lead-free metal, or from a metal alloy, or from any material with tin coating.

**13.** The component according to any of claims 1 to 12, which is a plastics part as used in electronic engineering, a

mechatronic component, or a plastics casing with plug-in contacts.

**14.** A process for the production of a component according to any of claims 1 to 13, comprising the following steps:

(a) sheathing of an insert part with a first plastics component A, where the first plastics component A is composed of:

A1: from 50 to 100% by weight of at least one thermoplastic styrene (co)polymer and
A2: from 0 to 50% by weight of at least one thermoplastic (co)polyester,
in each case based on the polymer content of the first plastics component A,

(b) molding of exterior sheathing composed of a second plastics component B, where the second plastics component B is composed of:

B1: from 50 to 100% by weight of at least one semicrystalline, thermoplastic polyester based on aromatic dicarboxylic acids and on aliphatic or aromatic dihydroxy compounds and
B2: from 0 to 50% by weight of at least one thermoplastic styrene (co)polymer,
in each case based on the polymer content of the second plastics component B,

where either the insert part is first sheathed with the first plastics component A and then the second plastics component B is applied or the exterior sheathing B is first molded, and then the first plastics component A is charged to a cavity between the exterior sheathing composed of the second plastics component B and the insert part, in order to form the sheathing of the insert part.

**15.** The process according to claim 14, wherein the sheathing of the insert part with the first plastics component A and the sheathing composed of the second plastics component B are produced via an injection-molding process.

## Revendications

**1.** Élément, comprenant une partie d'insertion ainsi qu'une enveloppe en matière plastique constituée d'au moins deux composants en matière plastique, la partie d'insertion étant entourée par un premier composant en matière plastique A et le premier composant en matière plastique A étant entouré par un second composant en matière plastique B afin d'obtenir une liaison étanche aux fluides le long de l'interface entre la partie d'insertion et l'enveloppe en le premier composant en matière plastique A, ainsi que le long de l'interface entre le premier composant en matière plastique A et le second composant en matière plastique B, de sorte que le taux de fuite déterminé avec un procédé à pression différentielle à une pression d'essai de 0,5 bar après un test de changement climatique comprenant au moins 200 cycles, lors duquel l'élément à tester est soumis en alternance à une température de -40 °C et de +150 °C, soit inférieur à 0,5 $cm^3$/minute, **caractérisé en ce que** le premier composant en matière plastique A est constitué de :

A1 : 10 à 100 % en poids d'au moins un (co)polymère de styrène thermoplastique et
A2 : 0 à 90 % en poids d'au moins un (co)polyester thermoplastique,
à chaque fois par rapport à la proportion de polymère du premier composant en matière plastique A,
et le second composant en matière plastique B est constitué de :

B1 : 50 à 100 % en poids d'au moins un polyester thermoplastique partiellement cristallin à base d'acides dicarboxyliques aromatiques et de composés dihydroxy aliphatiques ou aromatiques, et
B2 : 0 à 50 % en poids d'au moins un (co)polymère de styrène thermoplastique,
à chaque fois par rapport à la proportion de polymère du second composant en matière plastique B,
le premier composant en matière plastique A et le second composant en matière plastique B présentant des compositions différentes.

**2.** Élément selon la revendication 1, **caractérisé en ce que** le (co)polymère de styrène thermoplastique A1 est choisi dans le groupe constitué par les copolymères de styrène-butadiène, les copolymères de styrène-acrylonitrile, les copolymères d'$\alpha$-méthylstyrène-acrylonitrile, les copolymères de styrène-acrylonitrile à phase caoutchoutique particulaire constitués de polymères de diènes ou d'acrylates d'alkyle, et les copolymères d'$\alpha$-méthylstyrène-acrylonitrile à phase caoutchoutique particulaire constitués de polymères de diènes ou d'acrylates d'alkyle, les unités monomères

différentes du styrène étant chacune contenues en une proportion de 15 à 40 % en poids dans les copolymères.

3. Élément selon la revendication 2, **caractérisé en ce que** le (co)polymère de styrène thermoplastique A1 contient en outre de l'α-méthylstyrène ou du n-phénylmaléinimide en une proportion de 0 à 70 % en poids, par rapport à la masse du (co)polymère de styrène A1.

4. Élément selon l'une quelconque des revendications 1 à 3, **caractérisé en ce que** le polyester thermoplastique A2 est choisi dans le groupe constitué par le polyéthylène téréphtalate, le polytriméthylène téréphtalate, le polybutylène téréphtalate et les copolyesters d'un ou de plusieurs diacides avec un ou plusieurs diols et éventuellement avec une ou plusieurs lactones.

5. Élément selon l'une quelconque des revendications 1 à 4, **caractérisé en ce qu'**au moins un des polyesters thermoplastiques A2 du premier composant en matière plastique A présente un point de fusion inférieur à celui du polyester B1 du second composant en matière plastique B ou présente une température de transition vitreuse qui est inférieure au point de fusion du polyester B1 du second composant en matière plastique.

6. Élément selon l'une quelconque des revendications 1 à 5, **caractérisé en ce que** le polyester thermoplastique partiellement cristallin B1 du second composant en matière plastique B est un polyalkylène téréphtalate ou un mélange d'au moins deux polyalkylène téréphtalates différents, le polyalkylène téréphtalate comprenant de préférence 2 à 10 atomes C dans la partie alcool.

7. Élément selon la revendication 6, **caractérisé en ce que** le polyalkylène téréphtalate est un polyéthylène téréphtalate, un polytriméthylène téréphtalate, un polypropylène téréphtalate, un polybutylène téréphtalate ou un mélange d'au moins deux de ces polyalkylène téréphtalates.

8. Élément selon l'une quelconque des revendications 1 à 7, **caractérisé en ce que** le (co)polymère de styrène thermoplastique B2 est choisi dans le groupe constitué par l'acrylonitrile-styrène-ester acrylique, les copolymères d'acrylonitrile-butadiène-styrène, les copolymères de styrène-acrylonitrile et leurs mélanges.

9. Élément selon l'une quelconque des revendications 1 à 8, **caractérisé en ce que** le premier composant en matière plastique A et/ou le second composant en matière plastique B contiennent en outre un ou plusieurs additifs, choisis dans le groupe constitué par les charges fibreuses ou particulaires, les modificateurs de la résistance aux impacts, les agents ignifuges, les agents de nucléation, les noirs de carbone, les pigments, les colorants, les agents de démoulage, les stabilisateurs contre le vieillissement thermique, les antioxydants, les stabilisateurs d'usinage et les promoteurs de compatibilité.

10. Élément selon l'une quelconque des revendications 1 à 9, **caractérisé en ce que** le premier composant en matière plastique A contient 0,1 à 40 % en poids de billes de verre, par rapport à la masse totale du premier composant en matière plastique A.

11. Élément selon l'une quelconque des revendications 1 à 10, **caractérisé en ce que** le second composant en matière plastique B contient 0,1 à 50 % en poids de charges fibreuses, notamment de fibres de verre, par rapport à la masse totale du second composant en matière plastique B.

12. Élément selon l'une quelconque des revendications 1 à 11, **caractérisé en ce que** la partie d'insertion est fabriquée en cuivre, en un alliage contenant du cuivre, en aluminium, en un alliage contenant de l'aluminium, en titane, en acier inoxydable, en un métal sans plomb ou en un alliage de métal ou en un matériau à revêtement d'étain.

13. Élément selon l'une quelconque des revendications 1 à 12, **caractérisé en ce que** l'élément est une pièce en matière plastique, telle qu'utilisée dans la technologie électronique, un élément mécatronique ou un boîtier en matière plastique comprenant des connecteurs.

14. Procédé de fabrication d'un élément selon l'une quelconque des revendications 1 à 13, comprenant les étapes suivantes :

    (a) l'enveloppement d'une partie d'insertion avec un premier composant en matière plastique A, le premier composant en matière plastique A étant constitué de :

A1 : 50 à 100 % en poids d'au moins un (co)polymère de styrène thermoplastique et
A2 : 0 à 50 % en poids d'au moins un (co)polyester thermoplastique,
à chaque fois par rapport à la proportion de polymère du premier composant en matière plastique A, (b) la formation d'une enveloppe extérieure en un second composant en matière plastique B, le second composant en matière plastique B étant constitué de :

B1 : 50 à 100 % en poids d'au moins un polyester thermoplastique partiellement cristallin à base d'acides dicarboxyliques aromatiques et de composés dihydroxy aliphatiques ou aromatiques, et
B2 : 0 à 50 % en poids d'au moins un (co)polymère de styrène thermoplastique,

à chaque fois par rapport à la proportion de polymère du second composant en matière plastique B, soit la partie d'insertion étant tout d'abord enveloppée avec le premier composant en matière plastique A, puis le second composant en matière plastique B étant appliqué, soit l'enveloppe extérieure B étant tout d'abord formée, puis une cavité formée entre l'enveloppe extérieure en le second composant en matière plastique B et la partie d'insertion étant remplie avec le premier composant en matière plastique A afin de former l'enveloppe de la partie d'insertion.

**15.** Procédé selon la revendication 14, **caractérisé en ce que** l'enveloppe de la partie d'insertion avec le premier composant en matière plastique A et l'enveloppe en le second composant en matière plastique B sont fabriqués par un procédé de moulage par injection.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0249975 B
- EP 1496587 A
- DE 10053115 C
- EP 0245975 A
- WO 2008099009 A
- DE 102005033912 B
- WO 0200745 A
- WO 2008020012 A
- WO 2007009930 A
- DE 4401055 A
- US 3651014 A


### In der Beschreibung aufgeführte Nicht-Patentliteratur


- Modern Styrenic Polymers. Wiley & Sons, 2003, 305-338
- *Macromol. Symp.,* 2006, vol. 233, 17-25